# EUROPÄISCHE PATENTANMELDUNG

(11) **EP 2 290 655 A1**
(43) Veröffentlichungstag der Anmeldung: **02.03.2011**
(21) Anmeldenummer: 09010906.7
(22) Anmeldetag: 26.08.2009
(51) Int. Cl.: G11B 23/50, C09G 1/02

(54) **Verfahren zum Reparieren von digitalen Aufzeichnungsplatten**

(71) Anmelder: Schmid, Harald, 71691 Freiberg (DE)
(72) Erfinder: Schmid, Harald, 71691 Freiberg (DE)

(57) **Zusammenfassung**

Die Erfindung betrifft ein Verfahren zum Reparieren von beschädigten digitalen Aufzeichnungsplatten, wie Schall- oder Bildaufzeichnungsplatten, die einen mittigen Auflagebereich zum Halten und Führen der Platte, eine Informationsträgerschicht mit zumindestens einer Informationsspur und eine, die leseseitige Fläche der Platte bedeckende Schutzschicht aufweisen, in der zu reparierende Beschädigungen vorhanden sind, wobei die Schutzschicht mittels einer Paste so weit abgetragen wird, bis keine Störungen beim Ablesevorgang mehr auftreten und die Paste dadurch gekennzeichnet ist, dass durch den enthaltenen Polyalkylenpolyol eine zusätzliche Glättung erreicht wird.

## Beschreibung

Die Erfindung betrifft ein Verfahren zum Reparieren von beschädigten digitalen Aufzeichnungsplatten, wie Daten-, Schall- oder Bildaufzeichnungsplatten, die einen mittigen Auflagebereich zum Halten und Führen der Platte, eine oder mehrere Informationsträgerschichten mit zumindest einer Informationsspur und eine, die leseseitige Fläche der Platte bedeckende Schutzschicht aufweisen, in der zu reparierende Beschädigungen vorhanden sind.

Digitale Daten-Discs haben eine verbreitete Anwendung als Informationsträger gefunden. DVDs oder Blu-Ray Discs, stellen Datenträger dar, die eine bislang nicht erreichbare Bild- und Tonwiedergabequalität ermöglichen. Diese liefern auch nach zahlreichen Abspielvorgängen noch ein störfreies Ton oder Bildsignal.
Gebräuchliche Discs bestehen aus einer ca. 1,2 mm starken Kunststoffscheibe mit ca. 12 cm Durchmesser. Die digitale Information wird in Form von kleinen Pits eingeprägt. Danach wird diese Seite mit einer Art Metallisierungsschicht versehen und mit einem Schutzlack versiegelt. Die Pits werden beispielsweise bei einer Compact Disc, ähnlich wie bei einer herkömmlichen Rillenschallplatte in einer durchgehenden, spiralförmigen Informationsspur eingeprägt.

Die Platten weisen meist eine mittige Öffnung auf, die zum Zentrieren in einem Abspielgerät dient. Um die mittige Öffnung ist ein ringscheibenförmiger beidseitiger Auflagebereich vorgesehen, der keine Informationen trägt und als Angriffsfläche für Halte- und Antreibmittel des Abspielgerätes dient. Der Informationsträgerbereich kann von beiden Seiten für den Ablesevorgang zugänglich sein.

Beim Lesevorgang tastet ein Laserstrahl die Aufzeichnungsplatte ab, d.h., er durchdringt Kunststoff- oder Schutzschicht, wird von einer Art Metallisierungsschicht reflektiert, durchläuft erneut die Kunststoff- oder Schutzschicht und tritt dann wieder aus der Platte aus. Es wurde festgestellt, daß Beschädigungen, wie beispielsweise Kratzer, in der Kunststoff- oder Schutzschicht das Arbeitsverhalten der Disc dahingehend beeinträchtigen, daß deutlich sicht- oder hörbare Aussetzer oder Datenfehler festzustellen sind. Bei extrem starken Beschädigungen ist die Platte nicht mehr abspielbar, d.h. sie wird von Geräten nicht mehr angenommen. Zwar besitzen Abspielgeräte für digital codierte Platten, z.B. Compact Disc-Abspielgeräte (CD-Player) eine Fehlerkorrektur, die Störungen in der Datenübermittlung bis zu einem gewissen Grad ausgleichen kann, die jedoch nach Überschreiten einer gewissen Toleranzgrenze nicht mehr unterdrückt werden können.

Bereits kleine Kratzer, die bei unsachgemäßem Handhaben der Disc entstehen können, können zu Störungen führen. Ist die Kunststoff- oder Schutzschicht durch Beschädigungen, beispielsweise in Form von Kratzern beeinträchtigt, so ist es möglich, daß der Lesestrahl durch Reflexionen an den etwa V-förmigen Einschnittseitenwänden der Kratzer derart abgelenkt wird, daß er nicht mehr die Informationsspur trifft. Es können auch zum Lesen zusätzlich zum Lesestrahl zumindest zwei weitere Strahlen verwendet werden, die beidseitig des Lesestrahls verlaufen, wobei einer diesem vorläuft und einer diesem nachgeht. Die beiden seitlichen Führungsstrahlen laufen dabei zwischen zwei nebenliegenden Informationsspuren und schließen die mittige Informationsspur, die der Lesestrahl abtasten soll, ein. Störungen jedoch, die eine Beeinflussung der drei Strahlen dahingehend verursachen, daß der Lesestrahl nicht mehr die vorgeschriebene Information abtastet, führen dann zu wahrnehmbaren Störungen.

Aufgabe der vorliegenden Erfindung ist daher, ein Verfahren der eingangs genannten Art zu schaffen, wodurch beschädigte Discs einfach und unter Beibehaltung ihrer mechanischen Laufeigenschaften repariert werden können.

Erfindungsgemäß wird die Aufgabe beim Verfahren dadurch gelöst, daß die Schutzschicht so weit abgetragen wird, daß keine Störungen beim Ablesevorgang mehr auftreten. Durch Anlösen der Kunststoff- oder Schutzschicht wird zusätzlich eine Glättung erreicht.

Durch Abtragen von Material der Kunststoff- oder Schutzschicht werden die durch Beschädigungen verursachten Einschnitte oder Kratzer beseitigt. Beim Abtragen des Schutzschichtsmaterials entstehen zwangsläufig je nach Art und Weise des Abtragens, beispielsweise durch Abschleifen, Bearbeitungsspuren, die eine endliche Größe aufweisen, d.h. das Oberflächenbild beeinflussen. Durch die jetzt vorgeschlagene Maßnahme, nämlich die zusätzliche Glättung entstehen Oberflächenstörungen, die ab einer bestimmten Größe den Lesestrahl nicht mehr beeinflussen, oder so gering sind, daß sie durch die vorhandene Fehlerkorrektur unterdrückt werden.

Die Aufgabe wird somit vollkommen gelöst.

In einer weiteren Ausgestaltung der Erfindung verläuft die Arbeitsrichtung längs gegeneinander winkelversetzter Sekanten der Platte, die unter einem Winkel α, vorzugsweise unter 45° zueinander verlaufen.

Diese Maßnahme hat den Vorteil, daß ein "Kreuzschliff" durch die materialabhebende Bearbeitung entsteht, der zu einem besonders ebenen Oberflächenbild führt. Dadurch ist ein besonders gleichmäßiger Materialabtrag über einen großen Bereich ermöglicht.

In einer weiteren Ausgestaltung der Erfindung wird eine flüssigkeithaltige, lösemittelhaltige Schleifpaste eingesetzt.

Es versteht sich, daß die vorstehend genannten und In den Ansprüchen noch zu erläuternden Merkmale nicht nur in der jeweils angegebenen Kombination, sondern auch in anderen Kombinationen und in Alleinstellung einsetzbar sind, ohne den Rahmen der Erfindung zu verlassen.

## Patentansprüche

1. Verfahren zum Reparieren von beschädigten digitalen Aufzeichnungsplatten, wie Schall- oder Bildaufzeichnungsplatten, die einen mittigen Auflagebereich zum Halten und Führen der Platte, eine Informationsträgerschicht mit zumindestens einer Informationsspur und eine, die leseseitige Fläche der Platte bedeckende Schutzschicht aufweisen, in der zu reparierende Beschädigungen vorhanden sind, wobei die Schutzschicht mittels einer Paste so weit abgetragen wird, bis keine Störungen beim Ablesevorgang mehr auftreten und die Paste **dadurch gekennzeichnet ist, dass** durch den enthaltenen Polyalkylenpolyol eine zusätzliche Glättung erreicht wird.

2. Verfahren nach Anspruch 1, **dadurch gekennzeichnet, dass** das Polyalkylenpolyol Polyethylenglykol ist.

3. Verfahren nach Anspruch 1 oder 2, **dadurch gekennzeichnet, dass** die Paste als Schleifmittel Aluminiumoxid-Partikel umfasst.

4. Verfahren nach einem der vorhergehenden Ansprüche **dadurch gekennzeichnet, dass** die Aluminiumoxid-Partikel eine spezifische BET-Oberfläche von 0,4 bis 20 m²/g besitzen.

5. Verfahren nach einem der vorhergehenden Ansprüche **dadurch gekennzeichnet, dass** die Aluminiumoxid-Partikel einen Primärkristalldurchmesser von 0,2 bis 120 µm besitzen.

6. Verfahren nach einem der vorhergehenden Ansprüche, **dadurch gekennzeichnet, dass** das Polyalkylenpolyol in einer Größenordnung von 40-75% enthalten ist.

7. Verfahren nach einem der vorhergehenden Ansprüche, **dadurch gekennzeichnet, dass** die Arbeitsrichtung längs gegeneinander winkelversetzter Sekanten der Platte verläuft, die unter einem Winkel α, vorzugsweise unter 45° zueinander, verlaufen.

8. Verfahren nach einem der vorhergehenden Ansprüche, **dadurch gekennzeichnet, dass** das Abtragen durch mehrere Schleifvorgänge mit immer feinkörnigerem Poliermittel durchgeführt wird, und zwar derart, dass abschließend etwa eine Oberflächengüte einer neuen Platte erreicht wird.
